(19) Europäisches Patentamt
European Patent Office
Office européen des brevets

(11) EP 1 837 683 B1

(12) **FASCICULE DE BREVET EUROPEEN**

(45) Date de publication et mention de la délivrance du brevet:
**04.07.2018 Bulletin 2018/27**

(51) Int Cl.:
***G01V 11/00*** *(2006.01)*

(21) Numéro de dépôt: **07290346.1**

(22) Date de dépôt: **20.03.2007**

(54) **Utilisation de l'état stationnaire d'automates cellulaires échangeant de l'énergie pour modéliser des architectures sédimentaires**

Nutzung des stationären Zustands von zellulären Automaten, die Energie austauschen, zum Modellieren von Sedimentarchitekturen

Use of the stable condition of cellular automata exchanging energy to model sedimentary architectures

(84) Etats contractants désignés:
**GB**

(30) Priorité: **24.03.2006 FR 0602593**

(43) Date de publication de la demande:
**26.09.2007 Bulletin 2007/39**

(73) Titulaire: **IFP Energies nouvelles
92500 Rueil-Malmaison (FR)**

(72) Inventeurs:
• **Salles, Tristan
75019 Paris (FR)**
• **Lopez, Simon
75014 Paris (FR)**
• **Joseph, Philippe
78160 Marly-Le-Roi (FR)**
• **Cacas, Marie-Christine
92500 Rueil-Malmaison (FR)**

(56) Documents cités:
**EP-A- 1 435 527**

• **HOOKE J M ET AL: "A simulation model of morphological, vegetation and sediment changes in ephemeral streams" EARTH SURFACE PROCESSES AND LANDFORMS WILEY UK, vol. 30, no. 7, juillet 2005 (2005-07), pages 845-866, XP002422284 ISSN: 0197-9337**
• **BERNSDORF J ET AL: "COMPARISON OF CELLULAR AUTOMATA AND FINITE VOLUME TECHNIQUES FOR SIMULATION OF INCOMPRESSIBLE FLOWS IN COMPLEX GEOMETRIES" INTERNATIONAL JOURNAL FOR NUMERICAL METHODS IN FLUIDS, WILEY - INTERSCIENCE PUBLICATION, CHICHESTER, GB, vol. 29, no. 3, 15 février 1999 (1999-02-15), pages 251-264, XP001028561 ISSN: 0271-2091**

## Description

La présente invention concerne une méthode pour reconstruire l'architecture de couches sédimentaires d'un réservoir pétrolier résultant du passage d'un ou plusieurs courants sédimentaires, tels que les courants de turbidité.

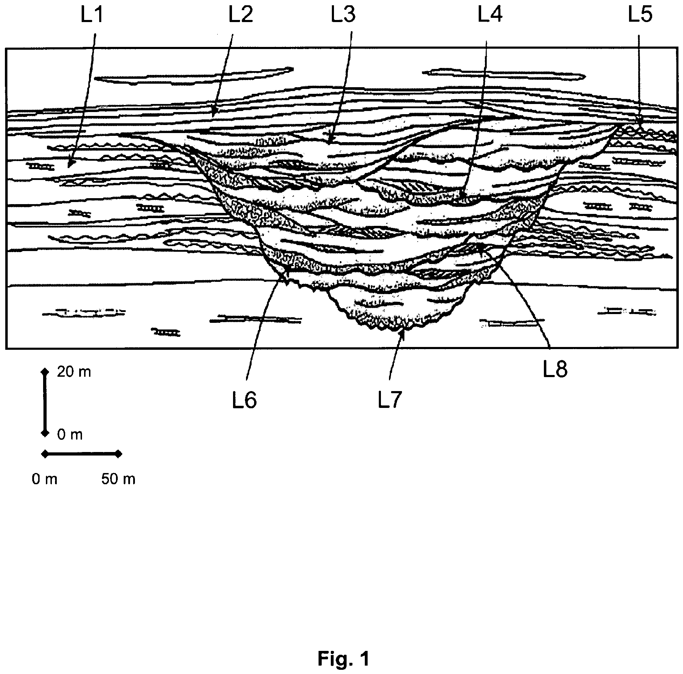

L'industrie pétrolière, et plus précisément l'exploration et l'exploitation de gisements pétroliers, nécessite d'acquérir une connaissance aussi parfaite que possible de la géologie souterraine pour fournir de façon efficace une évaluation des réserves, une modélisation de la production, ou la gestion de l'exploitation. En effet, la détermination de l'emplacement d'un puits de production ou d'un puits d'injection, les paramètres nécessaires à la récupération optimales des hydrocarbures, tels que la pression d'injection, la constitution de la boue de forage, les caractéristiques de complétion... nécessitent de bien connaître le gisement. Connaître le gisement signifie connaître les caractéristiques du sous-sol en tout point de l'espace. Ceci implique de connaître l'architecture sédimentaire de ce sous-sol, c'est-à-dire de définir la géométrie et la nature des couches géologiques constituant ce sous-sol. La figure 1 illustre l'architecture sédimentaire d'un exemple de réservoir. Elle représente la coupe géologique schématique d'un affleurement de dépôts turbiditiques, comportant huit lithologies (L1 à L8), et illustre la complexité des architectures sédimentaires à simuler. On observe en particulier différentes surfaces se recoupant, dues à la succession de remplissages et d'érosions. Cette architecture ne peut être observée, elle provient de modélisation des différents événements sédimentaires (courants sédimentaires marins ou aériens, dessiccation, ...) ayant affecté la région étudiée. L'architecture géologique définit ainsi différents objets géologiques, auxquels on peut attacher des propriétés pétrophysiques pour améliorer la caractérisation du gisement, et donc les différentes évaluations.

Depuis longtemps, l'industrie pétrolière allie les mesures techniques aux modélisations, réalisées en laboratoire et/ou par des logiciels.

Les modélisations des gisements pétroliers constituent donc une étape technique indispensable à toute exploration ou exploitation de gisement. Ces modélisations ont pour but de fournir une description du gisement, via son architecture sédimentaire et/ou ses propriétés pétrophysiques.

## Présentation de l'art antérieur

La méthode selon l'invention s'attache à reconstruire l'architecture de couches sédimentaires engendrée par un ou plusieurs courants sédimentaires, tels que les courants de turbidité.

Les courants de turbidité sont des écoulements de densité reconnus comme l'un des agents principaux de transfert de sédiments sur les fonds océaniques. La différence de densité, moteur du déplacement de ces courants, est entretenue par la présence de sédiments en suspension dans l'écoulement. Cette suspension qui rend l'écoulement turbide est elle-même entretenue par le déplacement du courant générant une turbulence importante.

Malgré un principe de fonctionnement a priori simple les hétérogénéités sédimentaires observées dans les dépôts résultant du passage de ces écoulements (turbidites), tout comme les architectures qu'ils engendrent sont encore mal expliqués et difficilement reliés à des processus physiques. Ce manque provient notamment des difficultés de mesure in situ sur les systèmes modernes. La caractérisation de ces hétérogénéités est pourtant primordiale pour l'exploration et l'exploitation des réservoirs pétroliers. Elle permet de prédire l'emplacement des objets géologiques potentiellement réservoirs et ceux constituant des barrières de perméabilité en fonction de leurs différentes propriétés pétrophysiques.

Cette tâche de caractérisation est traditionnellement effectuée de manière statistique en inférant des lois spatiales à partir de données d'affleurement ou de subsurface (logs de puits, carottages, sismique). Cependant, cette approche ne permet que de reproduire une distribution statistique particulière, et ne permet ni de l'expliquer ni de s'en éloigner. Elle reste néanmoins une alternative opérationnelle aux approches réductionnistes visant à reproduire numériquement, de manière exhaustive, les processus physiques pour lesquelles l'échelle de temps géologique reste, et devrait encore rester pour un certain temps, inaccessible.

En simplifiant ces lois physiques aux échelles spatiales et temporelles du bassin sédimentaire, la modélisation stratigraphique, telle que décrite par exemple dans les brevets US 5.844.799 et US 5.844.799, permet d'obtenir une distribution moyenne mais réaliste de différentes lithologies. Cependant, comme elle n'intègre pas, entre autres, les phénomènes inertiels, elle est incapable de prédire l'architecture sédimentaire d'un réservoir pétrolier de manière détaillée. Pour atteindre ce niveau de détail, la plupart des approches connues partent d'équations aux dérivées partielles qui sont ensuite discrétisées en utilisant différentes méthodes et schémas numériques. On peut citer par exemple Bradford, S. and Katopodes, N. (1999), « Hydrodynamics of turbid underflow: formulation and numerical analysis. », Journal of Hydraulic Engineering, 125(10):1006-1015). Ces discrétisations peuvent tirer parti d'un maillage astucieux comme dans Das, H., Imran, J., and Mohrig, D. (2004), « Numerical modeling of flow and bed evolution in meandering submarine channels », Journal of Geophysical Research, 109. Ces discrétisations peuvent également se faire à l'échelle d'objets géométriques, par exemple selon Hugot, A., Zaleski, S. and Joseph, P. (2000), « Phenomenological Modeling of Catastrophic Dilute Gravity Flows. », Oil & Gas Science and Technology - Rev. IFP, Vol. 55, No. 5, pp. 471-483. EP 1 435 527 décrit aussi une modélisation stratigraphique. Cependant, ces méthodes ne sont pas adaptées à la modélisation des dépôts sur des échelles de temps géologiques. Elles se concentrent au contraire la plupart du temps sur la description d'états transitoires au lieu de chercher un résultat moyen, ou alors elles sont restreintes à la modélisation des dépôts dans des environnements très spécifiques, par exemple à l'intérieur de chenaux.

La méthode selon l'invention permet de simuler la construction d'architectures sédimentaires multilithologiques liées au passage de courant de turbidité sur des temps géologiques en utilisant des automates cellulaires. En particulier on détermine pour chacun des automates un comportement stationnaire puis l'on modélise les échanges de matière et d'énergie entre ces automates.

**La méthode selon l'invention**

La présente invention concerne une méthode pour construire l'architecture de couches sédimentaires déposées sur une surface topographique suite au passage d'au moins un courant transportant des matières sédimentaires. Elle comporte les étapes suivantes :

- on discrétise ladite surface topographique en un ensemble de motifs géométriques, appelés automates ;

- on associe à chaque automate un état physique, défini par des paramètres physiques caractérisant au moins lesdites matières transportées, des flux d'échanges de matière entre ledit courant et son environnement, et une énergie dudit courant ;

- on détermine, pour chaque automate, un état physique stationnaire résultant d'un processus itératif dans lequel on construit des états physiques intermédiaires par échanges de matières et d'énergie entre lesdits automates ;

- on détermine, pour chaque automate et à partir dudit état physique stationnaire, au moins un des paramètres géologiques suivants : élévation de la surface topographique, épaisseurs de matières sédimentaires déposées et érodées suite au passage dudit courant, concentration volumique en matières sédimentaires.

- on construit pour chaque automate ladite architecture des couches sédimentaires à partir desdits paramètres géologiques.

Selon la méthode, le processus itératif peut comporter les étapes suivantes :

a) on calcule pour chaque automate, en fonction des états physiques dudit automate et des automates voisins, des quantités de matière et d'énergie échangées entre ces automates ;

b) on calcule un nouvel état physique pour chacun desdits automates en fonction desdites quantités de matière et d'énergie ;

c) on réitère le processus à partir de l'étape a), jusqu'à ce que ledit nouvel état physique soit identique à l'état physique de l'étape a) à une valeur numérique près, le nouvel état physique définissant ledit état physique stationnaire.

Dans le cas où le courant transportant des matières sédimentaires est un courant de turbidité, l'état physique de chaque automate peut comporter au moins les paramètres suivants :

- une hauteur de fluide turbide au dessus de l'automate ($h_i$) ;

- une description compositionnelle du fluide turbide ($c_i$) ;

- une densité d'énergie ($e_i$) ;

- une densité d'énergie turbulente $\left(e_i^T\right)$ entretenant la suspension des matières transportées ;

- des flux moyens d'échange de matière entre le courant de turbidité et son environnement ($f_i$).

Les flux d'échange de matière peuvent être déterminer partir des étapes suivantes pour chaque automate :

- on estime des flux instantanés d'échange de matière ;

- on détermine des taux moyens d'érosion et de dépôt en moyennant lesdits flux instantanés sur une durée dudit courant ;

- on calcule les flux d'échange de matière à partir desdits taux moyens d'érosion et de dépôt.

Si les matières sédimentaires ont des ensembles de caractères macroscopiques différents, c'est-à-dire qu'ils ont des lithologies différentes, on détermine les concentrations volumiques en matières sédimentaires et les flux d'échange de matière pour chacune de ces lithologies.

Enfin, si le nombre de courant est strictement supérieur à un, on traite ces courants selon leur ordre chronologique.

D'autres caractéristiques et avantages de la méthode selon l'invention, apparaîtront à la lecture de la description ci-après d'exemples non limitatifs de réalisations, en se référant aux figures annexées et décrites ci-après.

## Présentation sommaire des figures

- La figure 1 est la coupe géologique schématique d'un affleurement de dépôts turbiditiques.

- La figure 2 est un organigramme illustrant la procédure utilisée pour calculer l'état stationnaire des automates associé à un événement sédimentaire donné.

- La figure 3 illustre la distribution de matière et d'énergie entre des automates voisins.

- La figure 4 est un organigramme illustrant la procédure utilisée pour simuler des événements sédimentaires successifs, une fois définie l'implantation spatiale des automates cellulaires.

## Description détaillée de la méthode

La présente invention concerne une méthode pour reconstruire l'architecture de couches constituées de matières sédimentaires de lithologies variées, d'un réservoir pétrolier déposées par un ou plusieurs courants sédimentaires, tels que les courants de turbidité. On entend par lithologie l'ensemble de caractères macroscopiques de matières sédimentaires (sédiments), tels que la composition minéralogique, la texture, la couleur etc. Un courant sédimentaire est un fluide (eau, air) transportant des particules solides, les matières sédimentaires.

La méthode est basée sur l'utilisation d'un outil appelé « automate cellulaire ». Un automate cellulaire est un modèle discret. Il consiste en une grille de « cellules » pouvant chacune prendre à un instant donné un nombre fini d'« états ». Le temps est également discret et l'état d'une cellule au temps t est fonction de l'état au temps précédent d'un nombre fini de cellules constituant son « voisinage ». À chaque nouvelle unité de temps, les mêmes règles sont appliquées pour toutes les cellules de la grille, produisant une nouvelle « génération » de cellules dépendant entièrement de la génération précédente. La technique des automates cellulaires est décrite par exemple dans le document suivant :

- Wolfram, S. (1996), « Theory and Applications of Cellular Automata. », Advanced series on complex systems, World Scientific.

La modélisation est une étape technique indispensable à toute opération d'exploration et/ou d'exploitation de gisements pétroliers. Les méthodologies mises au point dans ce cadre, comme la méthode selon l'invention, mettent en oeuvre une série d'étapes techniques qu'il est souvent plus facile de décrire à l'aide d'un formalisme mathématique. C'est ainsi que pour décrire l'invention on utilise des notations mathématiques pour définir des paramètres ou des éléments techniques. Par exemple, un automate cellulaire n'est autre qu'une discrétisation d'une surface géologique (topographie) interne au gisement, un événement $\mathcal{E}^k$ correspond au passage d'un courant de turbidité, ...

Ainsi, pour faciliter la description, les notations suivantes seront utilisées :

Pour tout $i \in I$ l'état de l'automate $C_i$ est caractérisé par :

- $z_i$ : l'élévation de la topographie au centre $(x_i, y_i)$ de l'automate,

- $b_i$ : la description sédimentaire du substrat avec $b_i = \left(b_i^k\right)_{k \in \{0,1,\dots,K\}}$ et pour $k \in \{1,\dots,K\}$, $b_i^k = \left(d_i^k, \left(c_{i,l}^k\right)_{l \in \{1,\dots,L\}}\right)$ la brique sédimentaire déposée par l'événement $\mathcal{E}^k$ d'épaisseur $d_i^k$ et de concentration volumique (rapport entre le volume du flux de fluide de transport et le débit en volume du produit transporté) en sédiment de lithologie $l$, $c_{i,l}^k \in [0,1]$, et $b_i^0$ la brique sédimentaire caractérisant l'état initial de la paléotopographie.

- $h_i$ : la hauteur de fluide turbide au dessus de l'automate,

- $e_i$ : la densité d'énergie de l'automate, somme de sa densité d'énergie potentielle $e_i^P$ (liée à la présence du fluide en suspension) et de sa densité d'énergie cinétique $e_i^K$,

- $e_i^T$ : la densité d'énergie turbulente de l'automate, entretenant la suspension,

- $c_i$ : $c_i = (c_{i,l})_{l \in \{1,\dots,L\}}$ avec $c_{i,l} \in [0,1]$ la concentration volumique des sédiments de lithologie $l$ en suspension, $L$ étant le nombre total de lithologies. Permet de déterminer la description compositionnelle du fluide turbide,

- $E_i$ : $E_i = (E_{i,G}, E_{i,l})_{l \in \{1,\dots,L\}}$ la vitesse d'érosion globale du substrat avec $E_{i,l}$ le flux de matière sédimentaire de lithologie $l$ érodé. Permet de déterminer la description compositionnelle du flux de sédiments érodés et entraînés du substrat dans la suspension,

- $D_i$ : $D_i = (D_{i,l})_{l \in \{1,\dots,L\}}$ avec $D_{i,l}$ le flux de matière sédimentaire de lithologie $l$ déposé. Permet de déterminer la description compositionnelle du flux de sédiments déposés, c'est à dire tombant de la suspension sur le substrat,

- $w_i$ : le taux d'entraînement du fluide ambiant dans la suspension turbide.

Et pour tout i $\in I$, on note pour chaque automate :

- $G_i = (z_i, b_i)$ : l'ensemble des variables d'état permettant de reconstruire l'architecture des dépôts à partir de leur altitude, leur épaisseur et leur composition sédimentaire (le but de l'invention est la construction d'une valeur pour ces variables après le dernier événement modélisé),
- $f_i = (E_i, D_i, w_i)$ : les flux d'échange de matière (eau et sédiments) entre le courant de turbidité et son environnement,
- $\hat{P}_i = \left(h_i, e_i, e_i^T, c_i\right)$ : l'ensemble des variables d'état caractérisant la physique du courant de turbidité traversant l'automate $C_i$. Cet ensemble constitue l'état physique du courant.
- $P_i = (\hat{P}_i, f_i)$ : l'ensemble des variables d'état caractérisant le courant de turbidité et l'interaction avec son environnement. Cet ensemble constitue l'état physique de l'automate, appelé dans la suite l'état physique.
- $Q_i = (G_i, P_i)$ : l'ensemble des variables d'état de l'automate $C_i$,
- $Q = (Q_i)_{i \in I}$ : l'état de l'ensemble des automates, $G = (G_i)_{i \in I}$ la géologie des automates et $P = (P_i)_{i \in I}$ l'état physique des automates.

Soit un ensemble d'événements sédimentaires successifs

$$\left(\mathcal{E}^k\right)_{k \in \{1,\dots,K\}}$$

avec K le nombre d'événements, la méthode permet d'obtenir l'évolution et l'état résultant de chaque automate $C_i$ après les événements $\mathcal{E}^k$. La méthode peut se décomposer en quatre étapes majeures :

1- Définition d'une paléotopographie initiale

2- Construction d'automates cellulaires

Puis pour chaque courant sédimentaire $\mathcal{E}^k$ :

3- Initialisation de l'état physique des automates connu pour l'événement $\mathcal{E}^k$

4- Détermination d'un état physique stationnaire pour tous les automates

5- Construction de l'architecture sédimentaire résultant de l'événement $\mathcal{E}^k$ à partir de l'état stationnaire.

*1- Définition d'une paléotopographie*

On cherche à modéliser l'évolution d'une topographie sous-marine due à la succession d'événements sédimentaires au cours des temps géologiques. La méthode est décrite dans le cadre de courant de turbidité, mais tout autre événement sédimentaire, c'est-à-dire un courant sédimentaire comportant des phases de sédimentations et d'érosions, peut être modélisé dans le cadre de l'invention. La surface correspondant à la paléotopographie sous-marine juste avant le premier événement, ainsi que la composition lithologique d'éventuels dépôts antérieurs situés sous cette surface (substrat), sont déterminés à l'aide de modélisations basées sur l'acquisition de données par mesures directes ou indirectes : diagraphies, sismiques, carottes... Ces méthodes mettent en oeuvre différentes techniques d'inversion et de reconstruction des environnements sédimentaires et géographies passés à partir des données disponibles et sont toujours soumis à l'avis d'un expert (géologue, sédimentologue...).

Ainsi, la topographie initiale $\left(z_i^0\right)_{i\in I}$ et la nature initiale du substrat $\left(b_i^0\right)_{i\in I}$ sont déterminées. On connaît alors la géologie initiale du substrat caractérisée par $\left(G_i^0\right)_{i\in I} = \left(z_i^0, b_i^0\right)_{i\in I}$.

*2- Construction d'automates cellulaires*

On discrétise la surface correspondant à la paléotopographie initiale en utilisant un maillage dont la projection sur un plan horizontal donne un maillage plan bidimensionnel régulier. Ensuite, à l'aide de ce maillage plan, on cherche à modéliser l'évolution de cette paléotopographie due aux événements sédimentaires successifs.

Soit $(x_i, y_i)_{i\in I}$ l'ensemble des noeuds du maillage plan bidimensionnel régulier auxquels est affecté une altitude $\left(z_i^0\right)_{i\in I}$ de telle sorte que l'ensemble des points $(M_i)_{i\in I}$ de coordonnées respectives $\left(x_i, y_i, z_i^0\right)_{i\in I}$ soit une approximation de la paléotopographie. Sur le plan horizontal de projection, le maillage dual du maillage régulier précédent définit un ensemble de cellules $(C_i)_{i\in I}$ de centres respectifs $(x_i, y_i)_{i\in I}$ toutes géométriquement identiques et constituant ainsi une tesselation (la tesselation est l'opération qui consiste à paver une surface d'un même motif). On appelle par la suite automates ces cellules. Selon un mode de réalisation préférentiel, on exploite le fait que les automates ont tous une même base géométrique pour considérer toutes les quantités volumiques comme implicitement rapportées à l'aire $\mathcal{A}_i = \mathcal{A}$ de cette base. Selon un autre mode de réalisation, on peut garder la même méthode pour des automates d'aires différentes et faire apparaître chaque $\mathcal{A}_i$ dans le calcul des quantités volumiques.

*3- Conditions aux limites*

Pour chaque événement $\mathcal{E}^k$, correspondant au passage d'un courant de turbidité, on associe à $\mathcal{E}^k$ la durée de cet évènement notée $T^k$.

On définit un ensemble d'automates pouvant se trouver n'importe où dans le domaine modélisé (limite du domaine défini par la paléotopographie, puits, ...), et pour lesquels on dispose d'informations. Les indices de ces automates constituent $I_k$, un sous-ensemble non vide de $I$. Ces informations connues peuvent être des conditions que l'on se fixe aux limites du domaine, ou bien des valeurs obtenues au niveau d'un puits, que l'on obtient après des études diagraphiques, en laboratoire ...

Ces automates $(C_i)_{i\in I_k}$ définissent donc un sous-ensemble d'automates dont on connaît les états physiques $\left(P_i^k\right)_{i\in I_k}$.

La méthode selon l'invention, ainsi formulée par les différentes notations, permet de déterminer $Q^k$, l'état résultant de l'ensemble des automates après l'événement $\mathcal{E}^k$, ceci connaissant leur état antérieur $Q^{k-1}$. Elle se décompose en deux étapes successives : la recherche d'un état stationnaire de l'ensemble des automates, et le calcul de l'état résultant.

*4- Détermination d'un état physique stationnaire pour tous les automates*

*Principe*

Le passage d'un courant de turbidité accumule ou érode des sédiments au cours du temps en un point donné d'une topographie. La succession des états physiques du courant de turbidité au point considéré ainsi que l'interaction avec son environnement caractérisé par les variables $h_i, e_i, e_i^T$, $c_i$ et $f_i$ (état physique de l'automate), pourrait être modélisée à partir d'un modèle physique détaillé mais coûteux en temps de calcul. Selon l'invention, la connaissance de tous ces états transitoires n'est pas nécessaire pour obtenir une représentation réaliste des dépôts résultant de l'événement modélisé $\mathcal{E}^k$. La connaissance d'un état stationnaire, dans lequel l'échange de matière et d'énergie entre automates ne change pas leur état physique, décrit de manière correcte l'interaction du courant de turbidité avec son environnement à l'échelle des temps géologiques. C'est donc cet état stationnaire qui est utilisé pour construire l'architecture sédimentaire résultant de l'événement $\mathcal{E}^k$. La méthode, en déterminant un état stationnaire, évite ainsi de modéliser l'architecture sédimentaire en continu.

Pour déterminer cet état stationnaire, on construit par récurrence une suite d'états physiques de l'ensemble des automates, notée $(P^{k,n})_{n \in N}$, qui converge vers une limite $P_s^k$. Chacun de ces états intermédiaires correspond à des échanges de matière et d'énergie entre les automates, mais qui ne modifient pas l'état géologique des automates. Pour les distinguer d'états physiques ayant un impact sur l'architecture sédimentaire, ils sont appelés par la suite états physiques virtuels. Ces échanges sont effectués jusqu'à ce qu'ils n'altèrent plus l'état physique des automates. L'état limite $P_s^k$ ainsi obtenu est l'état physique stationnaire recherché associé à l'événement $\mathcal{E}^k$. C'est donc cet état $P_s^k$ qui est utilisé pour déterminer l'état géologique (architecture sédimentaire) résultant de l'événement $\mathcal{E}^k$.

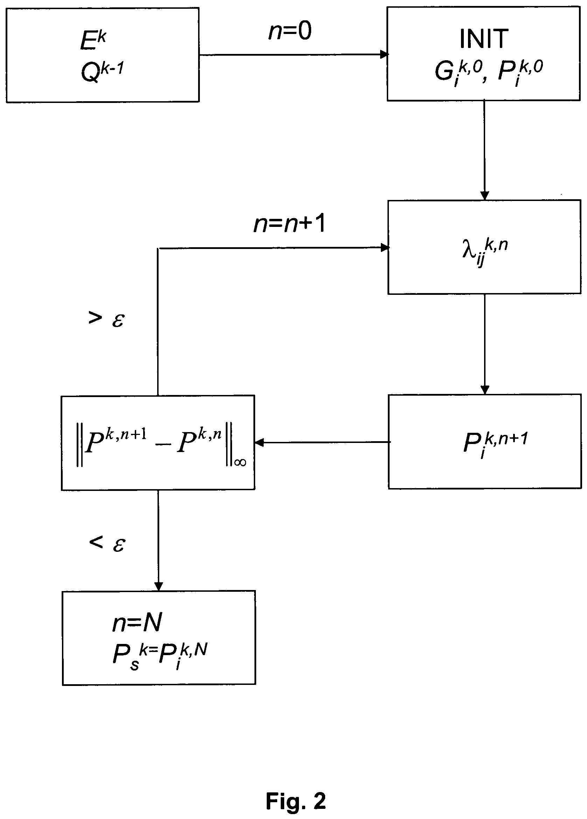

La figure 2 est un organigramme illustrant la procédure utilisée pour calculer l'état physique stationnaire des automates associé à un événement sédimentaire donné $\mathcal{E}^k$, connaissant l'état antérieur $Q^{k-1} = \left(Q_i^{k-1}\right)_{i \in I}$.

a) On initialise (INIT) le processus itératif pour n = 0 : $\left(G_i^0\right)_{i \in I}$ et $\left(P_i^{k,0}\right)_{i \in I}$

b) On calcule des coefficients de distribution $\left(\lambda_{ij}^{k,n}\right)_{j \in K_i}$ qui permettent de distribuer la matière et l'énergie ;

c) On distribue la matière et l'énergie et l'on calcule un nouvel état physique $\left(P_i^{k,n+1}\right)_{i \in I}$

e) On vérifie si l'état physique des automates $\left(P_i^{k,n+1}\right)_{i \in I}$ est stationnaire

f) Si l'état stationnaire n'est pas atteint, on réitère le processus à partir de l'étape b), en incrémentant n : *n = n + 1*.

*Initialisation du processus de récurrence*

On pose $J_k$ le complémentaire de $I_k$ dans $I$. La topographie initiale $\left(z_i^{k-1}\right)_{i \in I}$ étant connue (étape 1 d'initialisation ou résultat de la modélisation de l'événement

$$\mathcal{E}^{k-1}$$

) tout comme la nature initiale du substrat $\left(b_i^{k-1}\right)_{i\in I}$, on connaît la géologie du substrat caractérisée par $\left(G_i^{k-1}\right)_{i\in I} = \left(z_i^{k-1}, b_i^{k-1}\right)_{i\in I}$. On pose alors, pour l'état initial de l'ensemble des automates $Q^{k,0} = \left(Q_i^{k,0}\right)_{i\in I} = \left(G_i^{k,0}, P_i^{k,0}\right)_{i\in I}$ avec les états $\left(P_i^{k,0}\right)_{i\in I_k} = \left(P_i^k\right)_{i\in I_k}$ qui sont donnés avec l'événement $\mathcal{E}^k$ et $\left(P_i^{k,0}\right)_{i\in J_k} = (0)_{i\in J_k}$. Ceci revient à considérer qu'en dehors des automates dont l'état est connu pour l'événement $\mathcal{E}^k$ modélisé, tous les autres automates $(C_i)_{i\in J_k}$ ont les variables caractérisant leur état physique qui sont nulles au début de la récurrence qui recherche l'état physique stationnaire : la hauteur de fluide turbide au dessus de l'automate, l'état énergétique de l'automate (la densité d'énergie et la densité d'énergie turbulente de l'automate), la description compositionnelle du fluide turbide (concentrations volumiques des sédiments en suspension par lithologie), les flux d'échange de matière (eau et matières sédimentaires).

En résumé :

- pour tout $i \in I_k$ les états $P_i^{k,0} = P_i^k$ sont donnés avec l'événement $\mathcal{E}^k$ (conditions aux limites)

- pour tout $i \in J_k$ on pose $P_i^{k,0} = 0$

*Hypothèse de récurrence*

On suppose ici connu l'état physique virtuel $P^{k,n} = \left(P_i^{k,n}\right)_{i\in I}$ des automates après l'itération n dans la recherche de l'état stationnaire associé à l'événement $\mathcal{E}^k$.

Soit $K_i$ l'ensemble d'indices constitué de $i$ et des indices dans $I$ des voisins de l'automate $C_i$. Un automate est voisin d'un autre automate lorsqu'ils sont en contact.

Étant donné les états physiques virtuels $P^{k,n} = \left(P_i^{k,n}\right)_{i\in I}$ on construit maintenant les états physiques virtuels $P^{k,n+1} = \left(P_i^{k,n+1}\right)_{i\in I}$. Pour cela on suppose que chaque automate $C_i$ est susceptible de donner à son voisin $C_j$ ($j \in K_i$) une proportion $\lambda_{ij}^{k,n} \in [0,1]$ du fluide turbide qu'il contient, de telle sorte que :

- $\sum_{j\in K_i} \lambda_{ij}^{k,n} = 1$,

- $\lambda_{ii}^{k,n}$ représente la proportion de fluide turbide gardé par l'automate $C_i$

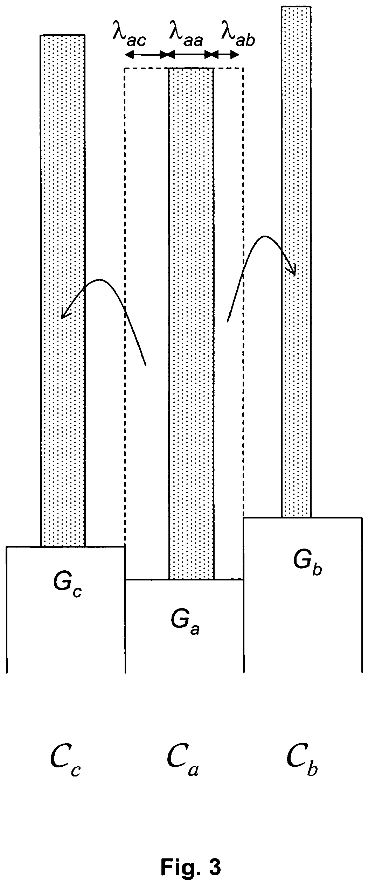

Ces proportions sont supposées être fonction seulement de l'état de l'automate considéré et de celui de ses voisins. Nous choisissons la distribution $\left(\lambda_{ij}^{k,n}\right)_{j\in K_i}$ qui minimise le travail $W_i = \sum_{j\in K_i} W_{ij}$ avec $W_{ij}$ le travail effectué par la force de pesanteur pour faire passer la quantité de fluide $\lambda_{ij}^{k,n} h_i$ de l'automate $C_i$ à son voisin $C_j$. On s'affranchit donc ici du biais directionnel que présentent de nombreux modèles d'automates cellulaires (en particulier ceux développés en domaine fluviatile). La figure 3 illustre la distribution de matière et d'énergie entre des automates voisins, dans laquelle $G_a$, $G_b$ et $G_c$ représentent l'état du substrat dans chacun des automates $C_a$, $C_b$ et $C_c$.

L'automate $C_a$ :

- donne la proportion $\lambda_{ab}$ de sa matière et de son énergie à son voisin de droite $C_b$ ;

- donne la proportion $\lambda_{ac}$ de sa matière et de son énergie à son voisin de gauche $C_c$,

- garde la proportion $\lambda_{aa}$ de sa matière et de son énergie.

On peut obtenir une distribution différente permettant de simuler la pression hydrodynamique liée à l'énergie cinétique, en remplaçant la hauteur de fluide $h_i$ par la hauteur $r_i$ obtenue en considérant que l'énergie de l'automate $h_i e_i$ est entièrement d'origine potentielle et liée à la surélévation de la colonne de fluide turbide d'une hauteur $r_i - h_i$.

Enfin, on notera que d'autres choix de distributions $\left(\lambda_{ij}^{k,n}\right)_{j \in K_i}$ sont envisageables, comme par exemple celui d'une distribution minimisant la variance expérimentale de la densité d'énergie cinétique sur l'ensemble des automates $(C_j)_{j \in ki}$.

Une fois la distribution $\left(\lambda_{ij}^{k,n}\right)_{j \in K_i}$ obtenue, on calcule les états $P_i^{k,n+1}$ en posant :

- si $i \in I_k$ l'état $P_i^{k,n+1} = P_i^k$ est donné avec l'événement $\mathcal{E}^k$,

- si $i \in J_k$ on calcule l'état résultant d'une distribution de fluide entre voisins comme suit :

  - Détermination de $h_i^{k,n+1}$

$$h_i^{k,n+1} = \lambda_{ii}^{k,n} h_i^{k,n} + \sum_{j \in K_i} \lambda_{ij}^{k,n}\left(h_j^{k,n} + w_j^{k,n}\right),$$

  - Détermination de $e_i^{k,n+1}$

$$h_i^{k,n+1} e_i^{k,n+1} = \lambda_{ii}^{k,n} h_i^k e_i^{k,n} + \sum_{j \in K_i} \lambda_{ij}^{k,n} h_j^k \left(e_j^{k,n} - \alpha e^{K_j^{k,n}}\right)$$

avec $\alpha$ le taux de transfert de l'énergie cinétique vers l'énergie turbulente de l'écoulement. Ce taux est une fonction croissante des dimensions de l'automate caractérisées par $\sqrt{\mathcal{A}}$. Le transfert d'énergie permet ici l'introduction d'un terme inertiel.

  - Détermination de $e^{T}{}_i^{k,n+1}$

$$h_i^{k,n+1} e^{T}{}_i^{k,n+1} = \lambda_{ii}^{k,n} h_i^{k,n} e^{T}{}_i^{k,n} + \sum_{j \in K_i} \lambda_{ij}^{k,n} h_j^{k,n}\left(e^{T}{}_j^{k,n} + \alpha e^{K_j^{k,n}} - \varepsilon^{T}{}_j^{k,n}\right)$$

avec $\varepsilon^{T}{}_i^{k,n}$ l'énergie turbulente dissipée dans l'automate $C_i$ donnée par : $\varepsilon^{T}{}_i^{k,n} = \varepsilon_0 e^{T}{}_i^{k,n} + W_i^S$ où $\varepsilon_0$ est un taux de dissipation par viscosité et $W_i^S$ le travail effectué par la turbulence pour maintenir en suspension la charge dans l'écoulement turbide et l'incorporation d'eau (Parker, G., Fukushima, Y., and Pantin, H. (1986), « Self-accelerating turbidity currents. », Journal of Fluid Mechanics, 171:145-181.).

  - Détermination de $c_i^{k,n+1}$

$$h_i^{k,n+1} c_i^{k,n+1} = \lambda_{ii}^{k,n} h_i^{k,n} c_i^{k,n} + \sum_{j \in K_i} \lambda_{ij}^{k,n} h_j^{k,n}\left(c_j^{k,n} + E_j^{k,n} - D_j^{k,n}\right)$$

La méthode proposée est multi-lithologique et prend en compte la ségrégation granulométrique.

On remarque ici que les règles de distribution sont telles que les termes de flux de matière $f_i^{k,n} = \left(E_i^{k,n}, D_i^{k,n}, w_i^{k,n}\right)$ entre un automate et son environnement ne sont utilisés que dans le calcul des quantités cédées à ses voisins.

A ce stade on connaît donc $\hat{P}_i^{k,n+1} = \left( h_i^{k,n+1}, e_i^{k,n+1}, e^{T_i^{k,n+1}}, c_i^{k,n+1} \right)$, l'état physique virtuel de l'automate sans considérer l'interaction avec son environnement, c'est-à-dire l'état physique virtuel du courant.

- On calcule ensuite les termes de flux $f_i^{k,n+1}$ à partir de l'état physique $\left( \hat{P}_i^{k,n+1} \right)$ obtenu précédemment, de la façon suivante :
  On calcule ensuite les flux d'eau entraînée par la turbulence au sommet de l'automate et les flux de matière érodée ou déposée à l'interface avec le substrat. Des formules classiques d'hydraulique permettent d'estimer pour chaque lithologie et chaque automate les flux instantanés d'eau et de sédiment $\widetilde{f}_i^{k,n+1}$ en fonction de l'état physique virtuel $\left( \hat{P}_i^{k,n+1} \right)$ du courant, de la nature du substrat caractérisée par sa géologie $\left( G_i^{k-1} \right)$ qui permet de faire des hypothèses sur sa rhéologie. L'originalité de notre méthode consiste à calculer à partir de ces flux instantanés les flux moyens $f_i^{k,n+1}$, en particulier des taux d'érosion et de dépôt moyens de l'automate $\left( E_i^{k,n+1}, D_i^{k,n+1} \right)$ qui sont obtenus en moyennant les taux instantanés $\widetilde{f}_i^{k,n+1}$ sur la durée $T_k$ de l'événement $\mathcal{E}^k$. Une fois les flux moyens connus, on obtient finalement l'état physique virtuel de l'automate $P_i^{k,n+1} = \left( \hat{P}_i^{k,n+1}, f_i^{k,n+1} \right)$.

La manière de calculer ces flux moyens est détaillée en fin de description pour ne pas alourdir la description.

*Arrêt de le récurrence : état stationnaire*

L'état physique stationnaire $P_S^k$ est obtenu à une précision numérique près, fixée par l'expérimentateur et caractérisée par un nombre $\varepsilon > 0$. On arrête alors le processus de récurrence pour $N > 0$ tel que :

$$\left\| P_i^{k,N} - P_i^{k,N-1} \right\|_\infty < \varepsilon$$

et on pose $P_S^k = P^{k,N}$. Dans la pratique on observe une convergence rapide vers l'état stationnaire $P_S^k$. Cette convergence peut certainement être accélérée en utilisant des méthodes classiques d'optimisation pour améliorer la procédure de récurrence. On peut par exemple envisager l'utilisation d'un préconditionnement pour obtenir plus rapidement l'état stationnaire au lieu de l'obtenir comme on le fait par une méthode de point fixe.

*5- Construction de l'architecture sédimentaire résultante de l'évènement sédimentaire à partir de l'état stationnaire.*

Une fois l'état physique stationnaire $P_S^k$ obtenu, on pose $P^k = P_S^k$ et on construit alors l'ensemble $G^k$ des variables d'état permettant de reconstruire la géologie des dépôts à partir de leur altitude, leur épaisseur et leur composition sédimentaire. Ainsi l'état $Q^k$ de l'ensemble des automates est totalement déterminé. $G^k$ est défini par $z_i^k$ et $b_i^k$.

La description sédimentaire du substrat est définie par la brique sédimentaire $b_i^k$ déposée par l'événement $\mathcal{E}^k$. Cette brique sédimentaire est d'épaisseur $d_i^k$ et de concentration volumique en sédiment de lithologie $l$, $c_{i,l}^k \in [0,1]$. On construit les briques sédimentaires $\left( b_i^k \right)_{i \in I}$ représentant l'événement $\mathcal{E}^k$ à partir des taux moyens d'érosion et de dépôts $\left( E_i^k, D_i^k \right)$ provenant de l'état physique $P^k$, appliqués sur la durée $T_k$.

- Erosion $\left( E_{i,G}^k > 0 \right)$

En cas d'érosion dans l'automate $C_i$ $\left( E_{i,G}^k > 0 \right)$ l'épaisseur $d_i^k$ de la brique $b_i^k$ est nulle et on pose donc :

$$d_i^k = 0 \, .$$

Les éventuelles briques sous-jacentes $\left(b_i^{k''}\right)_{k''<k}$ sont modifiées en conséquence pour modéliser l'érosion d'une hauteur $E_{i,G}^k T^k$. Si on note $\kappa_k$ l'indice de la brique la moins profonde à ne pas être totalement érodée alors on pose :

$$d_i^{\kappa_k} = d_i^{\kappa_k} - \left( E_{i,G}^k T^k - \sum_{k'=\kappa_k+1}^{k} d_i^k \right).$$

On pose ensuite pour tout $k' \in \{\kappa_k + 1,...,k\}$ : $d_i^{k'} = 0$ et $c_i^{k'} = c_i^{\kappa_k}$ ce qui revient à donner comme valeur de composition du substrat la composition de la brique remontée à la surface par l'érosion.

Enfin, la topographie du substrat est actualisée en affectant à $z_i^k$, élévation de la topographie au centre de l'automate, la valeur : $z_i^k = z_i^{k-1} - E_{i,G}^k T^k$.

- Dépôt $(E_{i,G}^k = 0)$

En cas de dépôt dans l'automate $C_i$ $(E_{i,G}^k = 0)$ les éventuelles briques sous-jacentes $\left(b_i^{k''}\right)_{k''<k}$ ne sont pas modifiées. On construit au sommet de ces briques une nouvelle brique $b_i^k$ dont l'épaisseur est donnée par :

$$d_i^k = \frac{T^k \sum_{l=1}^{L} D_{i,l}^k}{1 - \gamma_i^k}$$ avec $\gamma_i^k \in [0,1[$ la porosité de la brique déterminée en fonction des sédiments de lithologie $l$ déposées caractérisées par $D_i^k$.

La description compositionnelle de la brique est ensuite mise à jour en posant : $c_{i,l}^k = \dfrac{T^k D_{i,l}^k}{d_i^k}$.

Enfin, la topographie du substrat est actualisée en affectant à $z_i^k$, élévation de la topographie au centre de l'automate, la valeur : $z_i^k = z_i^{k-1} + d_i^k$.

Il est important de noter la prise en compte multi-lithologique de la méthode.

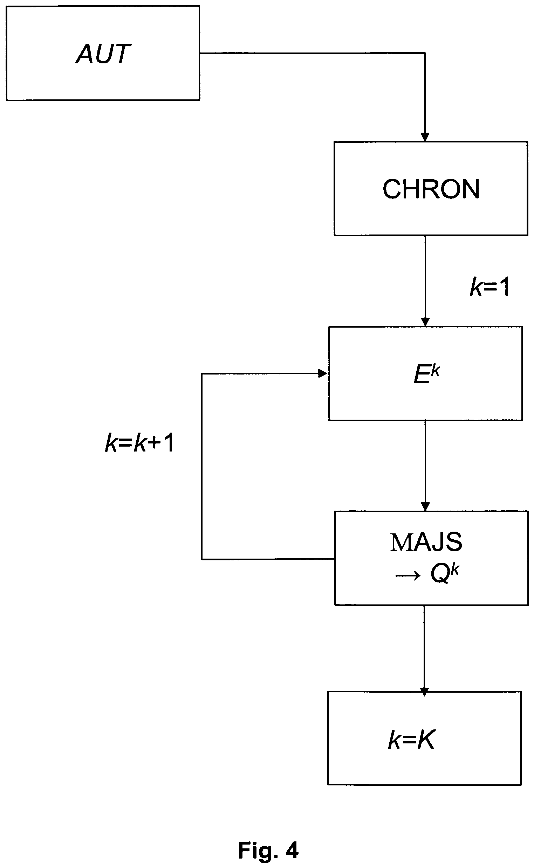

On a décrit une méthode pour reconstruire l'architecture de couches sédimentaires d'un réservoir pétrolier résultant d'un événement sédimentaire $\mathcal{E}^k$, tel qu'un courant de turbidité. Pour prendre en compte différents événements sédimentaires, il suffit d'appliquer la méthode ainsi décrite successivement pour chaque événement, dans l'ordre chronologique attaché aux différents événements. La figure 4 est un organigramme illustrant la procédure utilisée pour simuler des événements sédimentaires successifs :

- On définit les automates cellulaires (AUT)

- On classe les événements par ordre chronologique d'occurrence (CHRON)

- On choisit le premier événement $\mathcal{E}^k$ avec $k$=1

- On met à jour le substrat suite aux événements d'érosion et de dépôt de l'événement $\mathcal{E}^1$ (MAJS)

- On réitère en traitant l'événement suivant : $k=k+1$

Cette boucle s'arrête lorsque tous les évènements ont été traités.

**Description du calcul des flux instantanés et moyens**

Le calcul des flux moyens de matière à partir du calcul des flux instantanés est utilisé lors de la recherche d'un état stationnaire de l'écoulement. Afin d'alléger l'écriture on supprime toutes les notations se référant à l'événement ou au rang d'itération dans la procédure de recherche d'un état stationnaire. Enfin, on omet l'indice précisant l'automate considéré, les propos suivants sont tenus de manière générale pour un automate quelconque. Avec ces conventions, $c = (c_l)_{l\in\{1,...,L\}}$ désigne par exemple la description compositionnelle du fluide turbide.

On pose alors :

- $\rho_w$ la masse volumique du fluide ambiant dans lequel s'écoule le courant de turbidité, dans notre cas l'eau salée d'où une densité de l'ordre de $1030 g \cdot l^{-1}$,
- $\rho_l$ la masse volumique du sédiment de lithologie $l$ en suspension avec $\rho_l > \rho_w$,
- g l'accélération due à la gravité en $m \cdot s^{-2}$,

- $$R_l = \frac{\rho_l}{\rho_w} - 1$$ avec par conséquent $R_l > 0$,

- $$\rho_S = \rho_w \sum_{l=1}^{L} R_l c_l$$ la masse volumique apparente totale du matériel en suspension obtenue en soustrayant la poussée d'Archimède,

- $\rho_T = \rho_w + \rho_s$ la masse volumique totale du fluide turbide, comprenant la masse du fluide porteur, ici l'eau salée, et la masse du matériel en suspension.

**Calcul des flux instantanés**

Pour ce type de calcul, on peut se référer, par exemple, à l'ouvrage *Coastal Morphodynamics: Processes and Modelling,* numéro spécial de *Coastal Engineering* volume 21(1-3).

La densité d'énergie potentielle d'un automate d'altitude $z$ sur lequel se trouve une hauteur de fluide turbide $h$ est donnée par :

$$e^P = \rho_S g \left( z + \frac{h}{2} \right)$$

La densité d'énergie cinétique $e^K$ se déduit alors de la densité d'énergie totale $e$ de l'automate par :

$$e^K = e - e^P$$

De plus en notant $U$ la norme de la vitesse moyenne de l'écoulement turbide dans l'automate considéré, il vient également:

$$e^K = \frac{1}{2} \rho_T U^2$$

Le nombre de Richardson de l'écoulement s'exprime alors :

$$\text{Ri} = \frac{\rho_s g h}{U^2}$$

et **le taux instantané d'entraînement du fluide ambiant** peut être approché par :

$$\widetilde{w} = \frac{0,075}{\sqrt{1+718\mathrm{Ri}^2}}$$

Cette formulation peut par exemple être retrouvée dans "Experiments on turbidity currents over an erodible bed" de Parker, G., Fukushima, Y., et Yu, W. dans Journal of Hydraulics Research, 25(1):123-147, 1987. On peut également remplacer ce taux d'entraînement par un coefficient de mélange dépendant de la densité d'énergie turbulente de l'automate.

Ensuite, **le taux instantané de dépôt** $\tilde{D}_l$ de sédiment de lithologie $l$ en suspension est obtenu par la formule de Krone avec :

$$\widetilde{D}_l = c_l v_l^S \left(1 - \frac{\tau_*}{\tau_l^d}\right)_+$$

où :

- $v_l^S$ désigne la vitesse de chute des sédiments de lithologie $l$ dans le fluide ambiant (on néglige les effets pouvant être dus aux concentrations élevées, ou à la floculation des sédiments à lithologies fines),
- $\tau_*$ désigne la "contrainte de cisaillement" exercée par l'écoulement turbide sur le substrat, cette contrainte est principalement liée à la turbulence du fluide,
- $\tau_l^d$ désigne la contrainte seuil au delà de laquelle on n'observe pas le dépôt de sédiment de lithologie $l$,

- $(\cdot)_+$ désigne la fonction : $\begin{cases} R \to R \\ \cdot \mapsto \max(0,\cdot) \end{cases}$

La contrainte $\tau_*$ caractérisant l'effet de l'écoulement sur son substrat est obtenue à partir de la masse volumique de l'écoulement turbide et d'un ordre de grandeur $u_*^2$ du carré des fluctuations de la vitesse de l'écoulement près du fond liées à la turbulence. Cet ordre de grandeur est obtenu à partir de la densité d'énergie turbulente $e^T$ de l'automate.

On pose $u_*^2 = \alpha e^T$, avec classiquement $\alpha = 0,1$. Puis on a : $\tau_* = \rho_T u_*^2$ soit $\tau_* = \alpha \rho_T e^T$.

Enfin, le taux instantané d'érosion $\tilde{E}^{k,q}$ de la brique sédimentaire représentant le q-ème événement par l'écoulement correspondant à l'événement $\mathcal{E}^k$ est obtenu comme une fonction de l'action de l'écoulement sur le substrat caractérisée par $\tau_*$ et de la composition lithologique de cette brique. On pose :

$$\widetilde{E}^{k,q} = M^q \left(\frac{\tau_*}{\tau^{e,q}} - 1\right)_+$$

où $M^q$ et $\tau^{e,q}$ sont des paramètres dépendant de la composition lithologique du substrat avec $\tau^{e,q}$ représentant la contrainte seuil en dessous de laquelle on n'observe pas d'érosion par l'écoulement turbide. Une discussion sur la valeur des paramètres $M^q$ et $\tau^{e,q}$ dans l'ouvrage cité précédemment en référence.

En supposant que l'on soit en train d'éroder la brique sédimentaire $b^q$, **le taux instantané d'érosion** $\widetilde{E}_l^{k,q}$ de sédiments de lithologie $l$ dans le substrat est alors donné par :

$$\widetilde{E}_l^{k,q} = c_l^q \widetilde{E}^{k,q}$$

où $c_l^q$ désigne la concentration volumique de sédiments de lithologie $l$ dans la brique $b^q$.

L'implémentation d'un niveau actif d'échange entre le substrat et l'écoulement ne poserait pas de difficultés particulières. Comme nous ne le faisons pas, nous nous contentons ici de supposer vérifier l'inégalité suivante :

$$\max_{l \in \{1,\dots,L\}} \tau_l^d \leq \min_{q \in \{1,\dots,k-1\}} \tau^{e,q}$$

Cette condition permet d'assurer que l'on n'a pas simultanément $\tilde{D}_l$ et $\tilde{E}_l$ non nuls.

**Calcul des flux moyens**

Les **taux moyens d'entraînement de fluide ambiant et de dépôt** de sédiments de lithologie $l$ sont pris égaux aux flux instantanés.

Si $\tilde{E}^{k,k-1}$ le taux instantané d'érosion de la brique supérieure au moment de l'événement $\mathcal{E}^k$ est nul, le taux moyen d'érosion $E_l$ est pris nul pour chaque sédiment de lithologie $l$, tout comme le taux moyen d'érosion globale $E_G$.

Si $\tilde{E}^{k,k-1}$ n'est pas nul soit $d^q$ l'épaisseur de la brique sédimentaire $b^q$, on pose $t^{k,q} = \dfrac{d^q}{\tilde{E}^{k,q}}$ le temps nécessaire à l'écoulement correspondant à l'événement $\mathcal{E}^k$ pour éroder la brique $b^q$. Si l'on modélise l'événement $\mathcal{E}^k$ de durée $T^k$ on considère donc les briques sédimentaires $(b_q)_{q \in \{0,\dots,k-1\}}$. On cherche alors la brique la plus profonde que peut éroder le courant. Pour l'obtenir on pose :

$$\kappa_k = \min\left\{ \kappa \left| \begin{array}{l} \kappa \in \{0,\dots,k-1\} \\ \displaystyle\prod_{q=\kappa}^{k-1} \tilde{E}^{k,q} > 0 \\ \displaystyle\sum_{q=\kappa}^{k-1} t^{k,q} \leq T^k \end{array} \right. \right\} - 1$$

en supposant que $d^0 = \infty$ de telle sorte que $\kappa_k \geq 0$. En notant $\delta^k$ la hauteur de sédiment érodée sur la brique la plus profonde par l'événement $\mathcal{E}^k$, c'est à dire :

$$\delta^k = \tilde{E}^{k,\kappa_k}\left( T^k - \sum_{q=\kappa_k+1}^{k-1} t^{k,q} \right)$$

la hauteur totale $\Delta^k$ de sédiment érodé par l'événement $\mathcal{E}^k$ est alors obtenue par :

$$\Delta^k = \sum_{q=\kappa_k+1}^{k-1} d^q + \delta^k$$

Le taux moyen d'érosion globale $E_G$ sur la durée de l'événement $\mathcal{E}^k$ est alors donné par :

$$E_G = \frac{\Delta^k}{T^k}$$

Le flux moyen d'érosion $E_l$ de la couche de lithologie $l$ sur la durée de l'événement $\mathcal{E}^k$ est alors donné par :

EP 1 837 683 B1

$$E_l = \frac{\sum_{q=\kappa_k+1}^{k'-1} c_l^q d^q + \delta^k c_l^{\kappa_k}}{T^k}$$

Ainsi, la méthode selon l'invention permet de construire l'architecture sédimentaire multilithologique liée au passage de courant de turbidité sur des temps géologiques, ceci en utilisant des états physique stationnaires d'automates cellulaires, échangeant matière et énergie. La méthode n'est pas entachée d'un biais directionnel en ce qui concerne les règles de distribution du sédiment.

En produisant une distribution réaliste de faciès sédimentaires elle permet de mieux comprendre l'agencement des dépôts pour une prédiction plus fiable des réserves potentielles pendant la phase d'exploration et leur meilleure récupération pendant celle de production. Notre méthode permet également d'améliorer la résolution de la modélisation stratigraphique et peut prendre le relais des méthodes diffusives à l'échelle du réservoir.

Les bénéfices apportés à la pratique de l'ingénierie comprennent un positionnement amélioré des mesures et des essais sur le site à partir de la représentation de l'organisation spatiale, de la géométrie et de la variabilité des unités géologique sur la base de l'architecture sédimentaire et des environnements de dépôt.

## Revendications

1. Méthode mise en oeuvre par un ordinateur pour construire l'architecture de couches sédimentaires déposées sur une surface topographique suite au passage d'au moins un courant transportant des matières sédimentaires, **caractérisée en ce que** l'on réalise les étapes suivantes :

   - on discrétise ladite surface topographique en un ensemble de motifs géométriques, appelés automates cellulaires ;
   - on associe à chaque automate cellulaire un état physique, défini par des paramètres physiques caractérisant au moins lesdites matières transportées, des flux d'échanges de matière entre ledit courant et son environnement, et une énergie dudit courant ;
   - on détermine, pour chaque automate cellulaire, un état physique stationnaire résultant d'un processus itératif dans lequel on construit des états physiques intermédiaires par échanges de matières et d'énergie entre lesdits automates cellulaires ;
   - on détermine, pour chaque automate et à partir dudit état physique stationnaire, au moins un des paramètres géologiques suivants : élévation de la surface topographique, épaisseurs de matières sédimentaires déposées et érodées suite au passage dudit courant, concentration volumique en matières sédimentaires.
   - on construit pour chaque automate cellulaire ladite architecture des couches sédimentaires à partir desdits paramètres géologiques.

2. Méthode selon la revendication 1, dans laquelle le processus itératif comporte les étapes suivantes :

   a) on calcule pour chaque automate cellulaire, en fonction des états physiques dudit automate cellulaire et des automates cellulaires voisins, des quantités de matière et d'énergie échangées entre ces automates cellulaires ;
   b) on calcule un nouvel état physique pour chacun desdits automates cellulaires en fonction desdites quantités de matière et d'énergie ;
   c) on réitère le processus à partir de l'étape a), jusqu'à ce que ledit nouvel état physique soit identique à l'état physique de l'étape a) à une valeur numérique près, le nouvel état physique définissant ledit état physique stationnaire.

3. Méthode selon l'une des revendications précédentes, dans laquelle ledit courant est un courant de turbidité.

4. Méthode selon la revendication 3, dans laquelle l'état physique de chaque automate cellulaire comporte au moins les paramètres suivants :

   - une hauteur de fluide turbide au dessus de l'automate cellulaire($h_i$) ;
   - une description compositionnelle du fluide turbide ($c_i$) ;
   - une densité d'énergie ($e_i$) ;

15

- une densité d'énergie turbulente $\left(e_i^T\right)$ entretenant la suspension des matières transportées ;
- des flux moyens d'échange de matière entre le courant de turbidité et son environnement ($f_i$).

**5.** Méthode selon l'une des revendications précédentes, dans laquelle on détermine les flux d'échange de matière à partir des étapes suivantes pour chaque automate cellulaire :

- on estime des flux instantanés d'échange de matière ;
- on détermine des taux moyens d'érosion et de dépôt en moyennant lesdits flux instantanés sur une durée dudit courant ;
- on calcule les flux d'échange de matière à partir desdits taux moyens d'érosion et de dépôt.

**6.** Méthode selon l'une des revendications précédentes, dans laquelle lesdites matières sédimentaires ayant des lithologies différentes, on détermine les concentrations volumiques en matières sédimentaires et les flux d'échange de matière pour chacune de ces lithologies.

**7.** Méthode selon l'une des revendications précédentes, dans laquelle le nombre de courant étant strictement supérieur à un, on traite ces courants selon leur ordre chronologique.

**Patentansprüche**

**1.** Methode, die von einem Computer eingesetzt wird, um die Architektur von Sedimentschichten, die auf einer topografische Oberfläche nach dem Durchgang mindestens eines Stroms, der Sedimentmaterialien transportiert, abgelagert wurden, zu konstruieren, **dadurch gekennzeichnet, dass** die folgenden Schritte durchgeführt werden:

- Diskretisieren der topografischen Oberfläche in eine Gesamtheit von geometrischen Motiven, Zellautomaten genannt;
- zu jedem Zellautomaten Zuordnen eines physikalischen Zustands, der durch physikalische Parameter definiert ist, die mindestens die transportierten Materialien, Materialaustauschflüsse zwischen dem Strom und seiner Umgebung und eine Energie des Stroms kennzeichnen;
- für jeden Zellautomaten Bestimmung eines stationären physikalischen Zustands, der sich aus einem iterativen Prozess ergibt, bei dem physikalische Zwischenzustände durch Material- und Energieaustausch zwischen den Zellautomaten konstruiert werden;
- für jeden Zellautomaten und auf Basis des stationären physikalischen Zustands Bestimmung mindestens eines der folgenden geologischen Parameter: Erhebung der topografischen Oberfläche, Dicken von Sedimentmaterialien, die nach dem Durchgang des Stroms abgelagert und erodiert wurden, Volumenkonzentration an Sedimentmaterialien,
- für jeden Zellautomaten Konstruktion der Architektur der Sedimentschichten auf Basis der geologischen Parameter.

**2.** Methode nach Anspruch 1, bei der der iterative Prozess die folgenden Schritte umfasst:

a) für jeden Zellautomaten in Abhängigkeit von den physikalischen Zuständen des Zellautomaten und der benachbarten Zellautomaten Berechnung der zwischen diesen Zellautomaten ausgetauschten Material- und Energiemengen;
b) Berechnung eines neuen physikalischen Zustands für jeden der Zellautomaten in Abhängigkeit von den Material- und Energiemengen;
c) Reiteration des Prozesses ab dem Schritt a), bis der neue physikalische Zustand mit dem physikalischen Zustand des Schritts a) bis auf einen Zahlenwert identisch ist, wobei der neue physikalische Zustand den stationären physikalischen Zustand definiert.

**3.** Methode nach einem der vorhergehenden Ansprüche, bei der der Strom ein Trübungsstrom ist.

**4.** Methode nach Anspruch 3, bei der der physikalische Zustand jedes Zellautomaten mindestens die folgenden Parameter umfasst:

- eine Höhe an trüber Flüssigkeit über dem Zellautomaten ($h_i$);
- eine Beschreibung der Zusammensetzung der trüben Flüssigkeit ($c_i$);
- eine Energiedichte ($e_i$);
- eine Turbulenzenergiedichte ($e^T_i$), die die Suspension der transportierten Materialien erhält;
- Flüsse von Materialaustauschmitteln zwischen dem Trübungsstrom und seiner Umgebung ($f_i$).

**5.** Methode nach einem der vorhergehenden Ansprüche, bei der die Materialaustauschflüsse auf Basis der folgenden Schritte für jeden Zellautomaten bestimmt werden:

- Schätzung der momentanen Materialaustauschflüsse;
- Bestimmung der durchschnittlichen Erosions- und Ablagerungsraten mit Hilfe der momentanen Flüsse über eine Zeitdauer des Stroms;
- Berechnung der Materialaustauschflüsse auf Basis der durchschnittlichen Erosions- und Ablagerungsraten.

**6.** Methode nach einem der vorhergehenden Ansprüche, bei der, wobei die Sedimentmaterialien unterschiedliche Lithologien haben, die Volumenkonzentrationen an Sedimentmaterialien und die Materialaustauschflüsse für jede dieser Lithologien bestimmt werden.

**7.** Methode nach einem der vorhergehenden Ansprüche, bei der, wobei die Stromzahl unbedingt größer als eins ist, diese Ströme in ihrer chronologischen Reihenfolge behandelt werden.

## Claims

**1.** A computer-implemented method for constructing the architecture of sedimentary layers deposited on a topographic surface due to at least one current transporting sedimentary materials, **characterized in that** it comprises the following steps:

- discretizing said topographic surface into a set of geometric patterns referred to as cellular automata,
- associating with each cellular automaton a physical state, defined by physical parameters characterizing at least said transported materials, material exchange fluxes between said current and its environment, and an energy of said current,
- determining, for each cellular automaton, a stationary physical state resulting from an iterative process wherein intermediate physical states are constructed by material and energy exchanges between said cellular automata,
- determining, for each cellular automaton and from said stationary physical state, at least one of the following geologic parameters: elevation of the topographic surface, thickness of the sedimentary materials deposited and eroded due to said current, sedimentary material volume concentration,
- constructing for each cellular automaton said sedimentary layer architecture from said geologic parameters.

**2.** A method as claimed in claim 1, wherein the iterative process comprises the following steps:

a) calculating, for each cellular automaton, according to the physical states of said cellular automaton and of the neighbouring cellular automata, amounts of material and energy exchanged between these cellular automata,
b) calculating a new physical state for each one of said cellular automata according to said amounts of material and energy,
c) repeating the process from step a) until said new physical state is identical to the physical state of step a) to the nearest numerical value, the new physical state defining said stationary physical state.

**3.** A method as claimed in any one of the previous claims, wherein said current is a turbidity current.

**4.** A method as claimed in claim 3, wherein the physical state of each cellular automaton comprises at least the following parameters:

- a turbid fluid height above the cellular automaton ($h_i$),
- a compositional description of the turbid fluid ($c_i$),
- an energy density ($e_i$),

- a turbulent energy density $(e_i^T)$ sustaining the suspension of the transported materials,
- mean material exchange fluxes between the turbidity current and its environment ($f_i$).

5. A method as claimed in any one of the previous claims, wherein the material exchange fluxes are determined from the following steps for each cellular automaton:

- estimating instantaneous material exchange fluxes,
- determining mean erosion and deposition rates by averaging said instantaneous fluxes over a duration of said current,
- calculating the material exchange fluxes from said mean erosion and deposition rates.

6. A method as claimed in any one of the previous claims wherein, said sedimentary materials having different lithologies, the volume concentrations in sedimentary materials and the material exchange fluxes are determined for each one of these lithologies.

7. A method as claimed in any one of the previous claims wherein, the number of currents being strictly greater than one, these currents are processed according to their chronological order.

L1    L2    L3    L4    L5

20 m

0 m

0 m    50 m

L6    L7    L8

**Fig. 1**

**Fig. 2**

**Fig. 3**

AUT

CHRON

$k=1$

$E^k$

$k=k+1$

MAJS
$\rightarrow Q^k$

$k=K$

**Fig. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5844799 A
- EP 1435527 A

**Littérature non-brevet citée dans la description**

- **BRADFORD, S. ; KATOPODES, N.** Hydrodynamics of turbid underflow: formulation and numerical analysis. *Journal of Hydraulic Engineering,* 1999, vol. 125 (10), 1006-1015
- **DAS, H. ; IMRAN, J. ; MOHRIG, D.** Numerical modeling of flow and bed evolution in meandering submarine channels. *Journal of Geophysical Research,* 2004, 109
- **HUGOT, A. ; ZALESKI, S. ; JOSEPH, P.** Phenomenological Modeling of Catastrophic Dilute Gravity Flows. *Oil & Gas Science and Technology - Rev. IFP,* 2000, vol. 55 (5), 471-483
- **WOLFRAM, S.** Advanced series on complex systems. *Theory and Applications of Cellular Automata,* 1996
- **PARKER, G. ; FUKUSHIMA, Y. ; PANTIN, H.** Self-accelerating turbidity currents. *Journal of Fluid Mechanics,* 1986, vol. 171, 145-181
- **DE PARKER, G. ; FUKUSHIMA, Y. ; YU, W.** Experiments on turbidity currents over an erodible bed. *Journal of Hydraulics Research,* 1987, vol. 25 (1), 123-147